# EUROPÄISCHE PATENTSCHRIFT

(11) **EP 1 867 902 B1**
(45) Veröffentlichungstag und Bekanntmachung des Hinweises auf die Patenterteilung: **15.08.2012**
(21) Anmeldenummer: 07110038.2
(22) Anmeldetag: 12.06.2007
(51) Int. Cl.: F16K 15/06

(54) **Vorrichtung zum Eindosieren eines kryogenen Mediums**
Device for metering a cryogenic medium
Dispositif destiné au dosage d'un milieu cryogène

(30) Priorität: 14.06.2006 DE 102006027561
(43) Veröffentlichungstag der Anmeldung: 19.12.2007
(73) Patentinhaber: Messer France S.A.S., 92816 Puteaux Cedex (FR)
(72) Erfinder: Beaugé, Claude, 95610, Eragny-Sur-Oise (FR)
(74) Vertreter: Münzel, Joachim R.

(56) Entgegenhaltungen:
- EP-A- 0 688 983
- EP-A- 0 932 013
- WO-A-90/11233
- US-A- 3 693 644
- US-A1- 2003 015 240

## Beschreibung

Die Erfindung betrifft eine Vorrichtung zum Eindosieren eines kryogenen Mediums mit wenigstens einem in der Wandung eines Behältnisses integrierten und mit einer Zuführleitung für das kryogene Medium verbindbaren Ventil zum Einleiten des kryogenen Mediums in das Behältnis, wobei das Ventil mit Mitteln ausrüstet ist, die oberhalb eines vorgegebenen Differenzdrucks zwischen dem Druck des kryogenen Mediums in der Zuführleitung und dem Druck im Behältnis die Einleitung des kryogenen Mediums in das Behältnis ermöglichen, bei Unterschreiten des vorgegebenen Differenzdrucks dagegen das Ventil sperren.

In vielen industriellen Anwendungen werden kryogene Medien, insbesondere tiefkalte Flüssigkeiten oder Gase zum Kühlen oder Frosten von flüssigen, pastösen oder festen Produkten eingesetzt. Die Wärmeübertragung erfolgt dabei entweder indirekt, also ohne stofflichen Kontakt zwischen dem zu kühlenden Produkt und dem kryogenen Medium, über Wärmetauscherflächen oder durch eine direkten Kontaktierung des Produkts mit dem kryogenen Medium.

Bei der direkten Kühlung wird üblicherweise das Produkt durch eine Leitung geführt oder in einem Behälter gesammelt und das kryogene Medium über geeignete Düsen oder Ventile in die Leitung oder in den Behälter eingebracht. Im Folgenden werden die Begriffe "Leitung" und "Behälter" unter dem Begriff "Behältnis" subsumiert.

Befindet sich das zu kühlende Produkt in einem Behälter, beispielsweise in einem Mischer, so bestehen verschiedene Möglichkeiten zum Einspeisen des kryogenen Mediums: Bei der Einbringung im Kopfraum des Behälters haben die Eintrittstellen für das kryogene Medium keinen oder nur einen geringen Kontakt mit dem zu kühlenden Produkt. Da zwischen dem Produkt und den Eintrittsstellen ein gewisser Abstand besteht, ist die Gefahr der Vereisung der Eintrittstellen gering. Es können daher einfach aufgebaute Ventile oder Düsen, verwendet werden - beispielsweise Sprühdüsen oder Kapillardüsen, die gegenüber dem Behälterinnern stets geöffnet sind. Nachteilig bei diesen Systemen ist jedoch, dass immer nur ein Teil des kryogenen Mediums mit dem Produkt in Kontakt kommt und diesem Wärme entziehen kann. Ein großer Teil des kryogenen Mediums geht somit ungenutzt verloren.

Um die Wärmeenergie besser auf das kryogene Medium übertragen zu können, wird alternativ das kryogene Medium unmittelbar in das Produkt eingebracht. Dazu befinden sich die Eintrittstellen für das kryogene Medium nicht im Kopfraum sondern in einem unteren Teil des Behälters, also in jenem Bereich, der während der Behandlung mit dem zu kühlenden Produkt gefüllt ist. Bei dieser, im Fachjargon auch als "Bottom-Injection" bezeichneten Vorgehensweise ist jedoch darauf zu achten, dass das Ventil verschließbar ist, um in solchen Phasen während der Behandlung, während denen kein kryogenes Medium eingebracht wird, ein Vereisen der Eintrittstellen oder ein Eindringen von Produkt in das Innere der Düse oder des Ventils zu verhindern.

In der US 3,693,644 A und in der EP 0 688 983 A1 werden Differenzdruckventile beschrieben, die beim Befüllen von Druckbehältern eingesetzt werden, und die die Zufuhr eines unter Druck stehenden Fluids zum Behälter erst bei Vorliegen eines bestimmten Überdrucks erlaubt. Bei diesen Gegenständen besteht allerdings bei plötzlichem Druckabfall in der Zuleitung die Gefahr der Kontamination des Ventilinnern bzw. der Zuleitung durch Eindringen von Medium aus dem zu befüllenden Behälter.

Aus der EP 0 932 013 A2 und WO 90/11233 sind Befüllsysteme für wieder verwendbare Druckgasbehälter bekannt. Derartige Befüllsysteme sind jedoch nicht zur Lösung einer Aufgabe geeignet, bei der es um das Eintragen eines kryogenen Mediums in ein Produkt geht, das sich in einem Behälter, wie beispielsweise einem Mischer, befindet.

Ein für diesen Einsatz geeignetes Ventil zum Eintragen eines kryogenen Mediums wird in der DE 101 52 764 A1 beschrieben. Das Ventil umfasst ein Ventilgehäuse, das in der Wand eines Behälters, beispielsweise eines Mischers, integriert ist. Im Ventilgehäuse ist eine Ventilöffnung mit geringem Öffnungsquerschnitt angeordnet, die mittels einer Ventilnadel derart verschließbar ist, dass bei geschlossenem Ventil die Stirnfläche der Ventilnadel mit dem Ventilgehäuse bzw. der Innenoberfläche des Behälters im Wesentlichen bündig abschließt. Beim Einsatz des Ventils wird die Ventilnadel zurückgezogen und das Kühlmittel, beispielsweise flüssiger Stickstoff, strömt durch die Ventilöffnung in das Behälterinnere hinein und bildet einen tief in das zu kühlende Produkt eindringenden Kühlmittelstrahl aus. Beim Schließen des Ventils wird die Ventilnadel in Richtung auf den Behälter zu bewegt, wodurch etwaig in die Ventilöffnung eingedrungenes Produkt herausgedrängt wird. Nachteilig ist diese Anordnung insofern, als die Ventilnadel unabhängig vom Gaseintrag betätigt werden muss und daher die Gefahr besteht, dass bei rascher Druckminderung an der Gaszuleitung Produktreste in das Innere des Ventils eindringen können. Insbesondere beim Einsatz zur Kühlung von Lebensmitteln oder pharmazeutischen Produkten besteht dadurch die Gefahr von Keimbildungen, der durch regelmäßige intensive Reinigung des Ventils begegnet werden muss. Zudem führt der scharfe, in das Produkt gerichtete Kühlmittelstrahl insbesondere bei zähflüssigen Produkten dazu, dass örtliche Unterkühlungen im Produkt stattfinden können, die zu Verklumpungen des Produkts und damit zu einer Qualitätsminderung führen können.

Aufgabe der vorliegenden Erfindung ist daher, eine Vorrichtung zum Eindosieren eines kryogenen Mediums zu schaffen, bei dem das Eindringen von Produkt in das Innere des Eintragsventils zuverlässig verhindert wird.

Gelöst ist diese Aufgabe bei einer Vorrichtung der eingangs genannten Art und Zweckbestimmung dadurch,
dass das Ventil mit einem in einem Ventilgehäuse aufgenommenen, behälterseitig mit einem tellerförmigen Vorderabschnitt ausgestatteten, Absperrglied ausgerüstet ist, das im Schließzustand des Ventils auf einer Dichtfläche des Ventils aufliegt, wobei die Dichtfläche des Ventilgehäuses derart zurückgesetzt in der Wand des Behältnisses angeordnet ist, dass das Absperrglied mit seinem tellerförmigen Vorderabschnitt in einem Öffnungszustand des Ventils im wesentlichen bündig zu einer Innenoberfläche des Behältnisses verläuft, wobei das Absperrglied begrenzt axial beweglich im Ventilgehäuse aufgenommen ist und bei maximalem Vorschub des Absperrglieds die Stirnfläche des tellerförmigen Vorderabschnitts nicht weiter in das Innere des Behälters vorsteht, als bis sie im wesentlichen bündig mit einer Innenoberfläche des Behältnisses angeordnet ist.

Bei der erfindungsgemäßen Vorrichtung wird also erst bei Vorliegen eines bestimmten Überdrucks in der Zuleitung gegenüber dem Innendruck im Behältnis, also in dem Behälter oder in der Leitung, das Ventil freigegeben. Damit wird sichergestellt, dass kein Produkt aus dem Behältnis in den Innenbereich des Ventils eindringen kann. Die regelmäßige Reinigung des Ventils kann somit entfallen. Als Ventile kommen dabei beispielsweise handelsübliche Differenzdruckventile zum Einsatz, die erst oberhalb einer vorgegebenen Druckdifferenz zwischen zwei Punkten vor und hinter dem Ventil einen Strömungsweg freigeben. Als kryogenes Medium wird beispielsweise Stickstoff oder Sauerstoff in flüssigem oder kaltem gasförmigem Zustand eingesetzt. Stickstoff ist inert und besitzt gute Kühleigenschaften. Der Einsatz von kaltem Sauerstoff bei der Kühlung von Fleisch oder Fleischmasse führt nicht nur zu einer guten Kühlwirkung, sondern trägt zugleich zum Erhalt der roten Fleischfarbe bei. Ein gleichfalls vorteilhaftes kryogenes Medium ist Kohlendioxid, das flüssig herangeführt und beim Eintritt in das Behältnis unter Erzeugung von Kohlendioxidschnee entspannt. Der pulverförmige Kohlendioxidschnee kann mit insbesondere mit einem gleichfalls pulverförmigen Produkt innig durchmischt werden, wodurch eine effiziente Kühlung erzielt wird.

Die Höhe des Differenzdrucks, ab dem das Ventil öffnet bzw. sperrt, ist insbesondere in Abhängigkeit vom eingesetzten kryogenen Medium und/oder von dem zu kühlenden Produkt zu wählen. Beispielsweise beträgt der Differenzdruck bei Flüssigstickstoff 2 bis 2,5 bar, bei Kohlendioxid 7 bis 9 bar.

Zweckmäßigerweise ist das Ventil mit Mitteln ausgerüstet, die das kryogene Medium beim Einleiten in das Behältnis in radiale Richtung, also Richtung der benachbarten Innenwände des Behältnisses ablenken. Das kryogene Medium wird also nicht, wie beim Gegenstand der DE 101 52 764 A1 durch einen engen Kanal unter Ausbildung eines Kühlmittelstrahls in das Produkt eingetragen, sondern breit und flächig im Behältnis verteilt. Auf diese Weise werden lokale Unterkühlungen aufgrund einer zu starken Fokussierung des Kühlmittels im Produkt vermieden.

Die Erfindung sieht dabei vor, dass das Ventil mit einem in einem Ventilgehäuse aufgenommenen, stirnseitig mit einem tellerförmigen Vorderabschnitt ausgestatteten Absperrglied ausgerüstet ist, welcher Vorderabschnitt das kryogene Medium in gegenüber der Einströmrichtung radiale Richtung ablenkt und im Schließzustand des Ventil auf einer Dichtfläche des Ventilgehäuses aufliegt. Der tellerförmige Vorderabschnitt des Absperrglieds dient also gleichzeitig zum Sperren der Strömungsverbindung und zum Ablenken des kryogenen Mediums beim Einströmen in das Behältnis. Zum Innern des Ventilkörpers hin kann der Vorderabschnitt des Absperrgliedes verschiedenartig, beispielsweise rechteckig oder konisch zugeformt sein, wobei die Dichtfläche des Ventilgehäuses entsprechend anzupassen ist. Insbesondere eine konische Form ist vorteilhaft, da sie einen vergleichsweise geringen Strömungswiderstand aufweist, jedoch beim Einströmen des kryogenen Mediums eine breite Verteilung des Mediums im Behältnis begünstigt und zudem keine Möglichkeit zur Anlagerung von Produkt bietet.

Das Absperrglied ist vorzugsweise gegen die Wirkung eines Federelements bewegbar ausgebildet, wobei in Öffnungsrichtung die Bewegung zum Inneren des Behältnisses hin erfolgt. Diese Ausgestaltung bietet insbesondere zwei Vorteile: Zum einen kann die Dichtfläche für den tellerförmigen Vorderabschnitt des Absperrglieds auf der behälterseitigen Ausmündung des Ventilgehäuses angeordnet werden. Das Ventil wird also unmittelbar im Bereich der Wand des Behältnisses geöffnet oder geschlossen. Es keine längeren Leitungsstrecken vorhanden, in denen sich während der Schließphase des Ventils Produkt anlagern kann. Zum anderen wird der Differenzdruck, bei dem das Ventil öffnet bzw. schließt, im Wesentlichen durch die Rückstellkraft des Federelements bestimmt. Durch eine geeignete Wahl der Feder oder durch eine Variation des Federweges kann so der Differenzdruck leicht entsprechend den Anforderungen eingestellt werden.

Vorzugsweise ist das Absperrglied auf seiner vom tellerförmigen Abschnitt entgegen gesetzten Stirnseite mit einem Halteabschnitt ausgerüstet, und das als Spiralfeder ausgestaltete Federelement erstreckt sich zwischen dem Halteabschnitt und einem Federsitz des Ventilgehäuses. Der Federsitz des Ventilgehäuses ist dabei beispielsweise ungefähr in Höhe des tellerförmigen Abschnitts des Absperrglieds angeordnet, sodass sich die Feder zumindest teilweise parallel zum Absperrglied oder um dieses herum erstreckt und somit eine besonders kompakte Bauweise des Ventils erlaubt.

Gemäß der Erfindung ist die Dichtfläche des Ventilgehäuses derart zurückgesetzt in der Wand des Behältnisses angeordnet, dass das Absperrglied in einem Öffnungszustand im Wesentlichen bündig zu einer Innenoberfläche des Behältnisses verläuft. Auf diese Weise ist es insbesondere möglich, im Behältnis ein Misch- oder Schneidwerkzeug vorzusehen, dass sich bis unmittelbar an die Innenwand des Behältnisses erstreckt und vom geöffneten Ventil nicht behindert wird.

Vorzugsweise ist das Ventil lösbar mit der Innenwand des Behältnisses verbunden. Beispielsweise ist das Ventilgehäuse an seiner im bestimmungsgemäßen Einbau der Innenseite des Behältnisses zugewandten Abschnitt mit einem Gewinde versehen, das in ein entsprechendes Innengewinde in der Wand des Behältnisses oder in einer mit der Wand des Behältnisses verbundenen Ventilaufnahme eingeschraubt werden kann. Auf diese Weise lässt sich das Ventil einfach den jeweiligen Anforderungen anpassen und beim Wechsel des kryogenen Mediums oder des zu kühlenden Produkts leicht austauschen oder umrüsten.

Eine besonders bevorzugte Ausgestaltung der Erfindung sieht vor, dass das Ventil nicht im Kopfraum eines Behälters, sondern in einem unteren Bereich des Behälters angeordnet ist. Als "unterer Bereich" des Behälters wird hier der Teil des Behälters verstanden, der beim Einsatz der Vorrichtung mit Produkt gefüllt ist. Bei einer solchen, auch als "bottom injection" bekannten Ausgestaltung kommt das kryogene Medium unmittelbar mit dem zu kühlenden Produkt in Berührung, wodurch eine sehr effiziente Kühlung bewirkt wird. Die erfindungsgemäße Vorrichtung eignet sich für derartige Ausgestaltungen besonders, da bei dieser ein Eindringen von Produkt in das Ventilinnere zuverlässig vermieden wird.

In einer anderen bevorzugten Ausgestaltung der Erfindung handelt es sich bei dem Behältnis um eine Leitung zum Transport eines flüssigen oder gasförmigen Produkts. Derartige Systeme werden insbesondere zum Einleiten von verflüssigtem Kohlendioxid in Flüssigkeiten eingesetzt, beispielsweise in der Umwelttechnik zur Behandlung von Abwasser oder zum Auffrischen oder Entkeimen flüssiger Nahrungsmittel wie Wein, Säfte oder Milch. Die erfindungsgemäße Vorrichtung verhindert hier zuverlässig das Eindringen von Produkt in das Ventilinnere oder in die Zuleitung für das kryogene Medium, selbst im Falle von Druckschwankungen in der Leitung für das Produkt oder im Falle eines Druckabfalls in der Zuleitung für das kryogene Medium.

Eine vorteilhafte Ausführungsform der Erfindung sieht vor, dass das Behältnis in einer Mischeinrichtung zur Kühlung eines Produkts während des Mischvorgangs integriert ist. Bei dem Behältnis handelt es sich in diesem Fall beispielsweise um einen Behälter, in dem eine Rühreinrichtung angeordnet ist, oder um eine Leitung eines statischen Mischers.

Anhand der Zeichnung soll ein Ausführungsbeispiel der Erfindung näher erläutert werden.

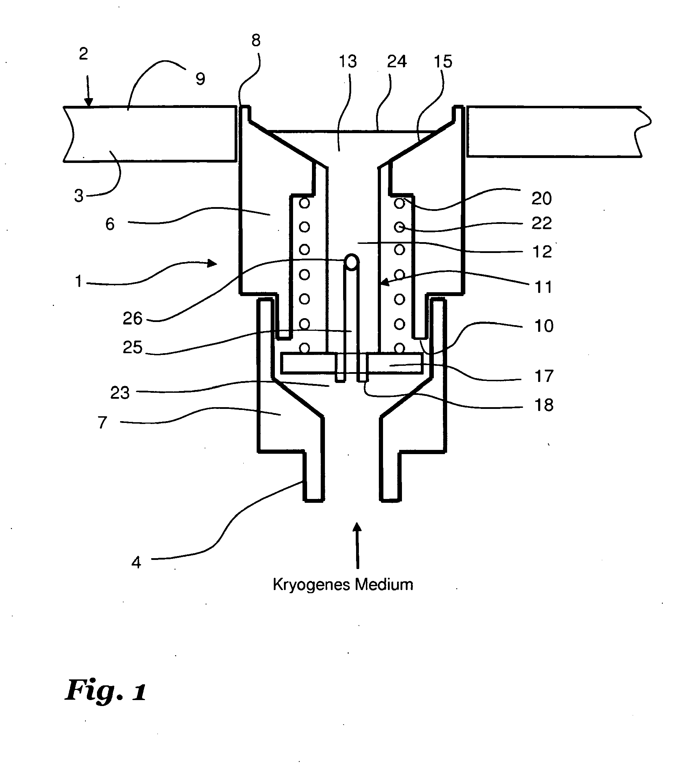

Die einzige Zeichnung (Fig. 1) zeigt schematisch eine erfindungsgemäße Vorrichtung zum Eindosieren eines kryogenen Mediums in einen Behälter.

Die Vorrichtung umfasst ein Ventil 1, das im Ausführungsbeispiel an einen Behälter 2 montiert ist. Anstelle des Behälters 2 kann das Ventil 1 jedoch ebenso gut an einer Gas- oder Flüssigkeitsleitung angeordnet werden. Das Ventil 1 weist einen aus zwei Gehäuseteilen 6,7 bestehenden Ventilkörper. Das vordere Gehäuseteil 6 des Ventilkörpers ist lösbar in der Behälterwand 3 des Behälters 2 befestigt, beispielsweise verschraubt, und zwar derart, dass die behälterseitige Ausmündung 8 des Gehäuseteils 6 im wesentlichen bündig mit der Innenfläche 9 der Behälterwand 3 abschließt. Das hintere Gehäuseteil 7 des Ventilkörpers ist am vorderen Gehäuseteil 6 ebenfalls lösbar, beispielsweise durch Verschrauben, befestigt, wobei die dem hinteren Gehäuseteil 7 zugewandte Stirnseite des vorderen Gehäuseteils 6 mit einer Ringschulter 10 im Innern des hinteren Gehäuseteils 7 vorsteht. Auf seinem vom vorderen Gehäuseteil 6 entgegen gesetzten Ende weist das hintere Gehäuseteil 7 einen Anschluss 4 zum Verbinden mit einer hier nicht gezeigten Zuführleitung für ein kryogenes Medium auf. Der Anschluss 4 ist dabei an die Art der Zuführleitung für das kryogene Medium angepasst, und fallweise druck- und/oder tieftemperaturfest ausgelegt. Beispielsweise handelt es sich bei dem Anschluss 4 um einen Gewindeanschluss oder einen Flansch. Als kryogenes Medium kommt beispielsweise ein verflüssigtes Gas wie Flüssigstickstoff, Flüssigsauerstoff oder flüssiges Kohlendioxid oder auch ein kaltes Gas, beispielsweise tiefkalter gasförmiger Stickstoff, zum Einsatz. Generell kann die erfindungsgemäße Vorrichtung dazu genutzt werden, Gas oder eine Flüssigkeit in ein Gas, eine Flüssigkeit oder in einen pastösen, pulverförmigen oder stückigen Stoff einzudosieren.

Im Innern der jeweils im Wesentlichen rotationssymmetrisch aufgebauten Gehäuseteile 6,7 des Ventilkörpers ist ein Absperrglied 11 axial beweglich aufgenommen, mittels dessen das Ventil 1 geschlossen und geöffnet werden kann. Das Absperrglied 11 umfasst einen im Wesentlichen zylindrisch ausgebildeten Innenabschnitt 12, an dessen dem Behälter 2 zugewandten Stirnseite sich ein tellerförmiger, im Querschnitt konischer Vorderabschnitt 13 anschließt. Der Vorderabschnitt 13 des Absperrglieds 11 ist so ausgebildet, dass er im Schließzustand des Ventils 2 - wie in Fig. 1 gezeigt - auf einem entsprechend konisch geformten Ventilsitz 15 des vorderen Gehäuseteils 6 dichtend aufsitzt. Um die Dichtigkeit weiter zu verbessern kann- hier nicht gezeigt - ein Dichtring aus einem flexiblen Material in einer rund umlaufenden Nut im Ventilsitz 15 angeordnet sein. An der vom Behälter 2 abgewandten Seite des Innenabschnitts 12 des Absperrglieds 11 ist ein ringförmiger Hinterabschnitt 17 vorgesehen, der auf einem Halteabschnitt 18 des Innenabschnitts 12 lösbar aufmontiert, beispielsweise verschraubt ist. Der Außenradius des Hinterabschnitts 17 ist größer als der Innendurchmesser der Ringschulter 10 des Ventilkörpers. Beim Öffnen des Ventils 2 begrenzt somit die Ringschulter 10 die axiale Verschiebbarkeit des Absperrglieds 11 in Richtung auf das Innere des Behälters 2, im maximalen Öffnungszustand liegt der Hinterabschnitt 17 auf der Ringschulter 10 auf. Im Schließzustand des Ventils 2 ist der Hinterabschnitt 17 dagegen beabstandet von der Ringschulter 10 angeordnet. Um eine Strömungsverbindung im Innern des Ventilkörpers zu beiden Seiten des Hinterabschnitts 17 sicher zu stellen, auch wenn der Hinterabschnitt 17 an der Ringschulter 10 anliegt, ist der Innenabschnitt 12 des Absperrglieds 11 mit einer zentralen Bohrung 25 versehen, die etwa in der Mitte des Innenabschnitts 12 in eine Radialbohrung 26 einmündet, die wiederum radial außenseitig am Innenabschnitt 12 des Absperrglieds 11 endet.

Zwischen dem Hinterabschnitt 17 und einem Federsitz 20 am vorderen Gehäuseteil 6 des Ventilkörpers erstreckt sich rings um den Innenabschnitt 12 des Absperrglieds 11 herum eine spiralförmige Schließfeder 22. Die Schließfeder 22 ist derart zwischen Federsitz 20 und Hinterabschnitt 17 des Absperrgliedes 11 eingespannt, dass sie bereits in der Schließposition des Ventils 2 unter einer gewissen Vorspannung steht. Dadurch öffnet sich das Ventil 1 erst bei Vorliegen eines bestimmten, durch die Federkraft der Schließfeder 20 festgelegten Differenzwertes (Grenzdruck) zwischen dem Druck im Innern des Ventilkörpers und dem Druck im Behälterinnenraum. Bei Überschreiten des Grenzdrucks wird das Absperrglied 11 aufgrund des auf den tellerförmigen Vorderabschnitt 13 des Absperrglieds 11 wirkenden Überdrucks im Innern des Ventilkörpers gegen die Wirkung der Schließfeder 22 axial in Richtung auf das Behälterinnere verschoben. Dabei öffnet sich im Bereich des Vorderabschnitts 13 des Absperrglieds 11 ein Ringspalt und gibt so einen Strömungsweg in das Innere des Behälters 2 frei.

Die konische Zuformung des Vorderabschnitts 13 des Absperrglieds 11 führt dazu, dass das kryogene Medium beim Einströmen in den Behälter 2 in radialer Richtung abgelenkt wird und sich sehr breit im Behälter 2 verteilt. Auf diese Weise wird die Ausbildung eines scharfen Kühlmediumsstrahls, der zu einer lokalen Unterkühlung eines im Behälter 2 vorhandenen Produkts führen könnte, verhindert. Die durch den Abstand zwischen dem Hinterabschnitt 17 und der Ringschulter 10 im Schließzustand des Ventils festgelegte maximale Vorschub des Absperrglieds 11 ist dabei so gewählt, dass die Stirnfläche 24 des Vorderabschnitts 13 nicht weiter in das Innere des Behälters 2 vorsteht, als bis sie im Wesentlichen bündig mit der Innenoberfläche 9 der Behälterwand 3 angeordnet ist. Ein im Behälter 2 angeordnetes Rührwerk oder Schieber, das bzw. der bis zu den Behälterwänden ausgreift, wird durch das Ventil 1 also nicht behindert.

Unterschreitet der Druck im Innenraum 23 des Ventilkörpers den oben definierten Grenzdruck, so schließt das Ventil 1 automatisch dadurch, dass sich das Absperrglied 11 unter der Wirkung der Schließfeder 22 in seine Sperrposition begibt, in der der tellerförmige Vorderabschnitt 13 auf der Dichtfläche 15 aufliegt. Dazu ist keine externe Ansteuerung des Absperrglieds erforderlich; die Dosage der in den Behälter eingeführten Menge an kryogenem Medium erfolgt direkt durch die Änderung des Drucks in der Zuführleitung. Da der Grenzdruck aufgrund der Vorspannung der Schließfeder 22 größer als der Innendruck im Behälter 2 ist, kann kein Produkt aus dem Innenraum des Behälters 2 in den Innenraum 23 des Ventils 2 eindringen. Dies gilt insbesondere auch im Falle eines plötzlichen, unvorhergesehenen Druckabfalls in der Zuführleitung des kryogenen Mediums. Daher ist die erfindungsgemäße Vorrichtung auch zum "bottom injection" geeignet, also zur Anordnung in einem Bereich der Behälterwand 3, der beim Einsatz vom zu kühlenden Produkt benetzt wird. Natürlich kann das Ventil 1 jedoch auch im Kopfraum des Behälters 2 oder in einer Zuleitung angeordnet werden.

Die Gehäuseteile 6,7 des Ventilkörpers, Absperrglied 11 und Feder 22 sind aus einem Material gefertigt, dass den tiefen Temperaturen und/oder den hohen Drücken des jeweils zum Einsatz kommenden kryogenen Mediums Rechnung trägt, beispielsweise aus einem geeigneten, tieftemperaturfesten Edelstahl. Zudem sind sie mit abgerundeten Kanten versehen, damit kein Produkt an den Ventilen anhaften und zu einer bakteriologischen Kontamination Anlass geben kann. Des weiteren sind die Teile 6,7,11 und 22 vorzugsweise lösbar miteinander und mit dem Behälter 2 verbunden, wodurch nicht nur eine etwaige Wartung erleichtert wird, sondern auch die Ventile dem eingesetzten kryogenen Medium und/oder der Behandlungsaufgabe angepasst werden können. Beispielsweise liegt der von der Vorspannung der Schließfeder 22 bestimmte Grenzdruck beim Einsatz von Flüssigstickstoff bei 0,5 bis 2 bar. Bei Verwendung von Kohlendioxid als Kühlmedium ist darauf zu achten, dass der Grenzdruck auf einen Wert eingestellt wird, der oberhalb des Tripelpunkts des Kohlendioxids liegt, um zu verhindern, dass sich innerhalb des Ventils 2 Trockeneis bildet, das unter Umständen zum Verschluss des Ventils führen kann. In diesem Fall ist beispielsweise ein Grenzdruck von 5 bis 8 bar oder mehr erforderlich. Um das Ventil 1 den geänderten Anforderungen anzupassen, wird das hintere Gehäuseteil 7 vom vorderen Gehäuseteil entfernt, die Feder 22 durch eine entsprechend härtere Feder bzw. Feder mit im Einbauzustand härteren Vorspannung ersetzt und der Ventilkörper verschlossen. Alternativ kann das Ventil auch komplett ausgetauscht werden.

Die erfindungsgemäße Vorrichtung genügt insbesondere den gehobenen hygienischen Anforderungen bei der Behandlung von Lebensmittel wie Teig, Mehl, Maische oder Fleischmasse zur Wurstherstellung, oder bei der Herstellung pharmazeutischer Produkte, Vorprodukte und Inhaltsstoffe, da der Eintrag von Produkt aus dem Behälter bzw. der Leitung in das Ventil zuverlässig vermieden wird. Die erfindungsgemäße Vorrichtung ist aber ebenso gut zur Behandlung anderer Materialien geeignet, beispielsweise für Zuschlagstoffe der Bauindustrie wie Zement oder Beton geeignet. Ein weiteres Anwendungsgebiet betrifft die Eindüsung eines kryogenen Mediums in eine von einem Gas oder einer Flüssigkeit durchströmten Leitung, beispielsweise bei der Abwasserbehandlung oder der Behandlung von Wein, Säften oder Milch.

### Bezugszeichenliste

- 1.: Ventil
- 2.: Behälter
- 3.: Behälterwand
- 4.: Anschluss
- 5.: -
- 6.: vorderer Gehäuseteil des Ventilkörpers
- 7.: hinterer Tei des Ventilkörpers
- 8.: Ausmündung (des Ventils)
- 9.: Innenoberfläche (der Behälterwand)
- 10.: Ringschulter
- 11.: Absperrglied
- 12.: Innenabschnitt
- 13.: Vorderabschnitt
- 14.: -
- 15.: Ventilsitz
- 16.: -
- 17.: Hinterabschnitt
- 18.: Halteabschntitt
- 19.: -
- 20.: Federsitz
- 21.: -
- 22.: Schließfeder
- 23.: Innenraum des Ventilkörpers
- 24.: Stirnfläche
- 25.: zentrale Bohrung
- 26.: Radialbohrung

## Patentansprüche

1. Vorrichtung zum Eindosieren eines kryogenen Mediums mit wenigstens einem in der Wandung (3) eines Behältnisses (2) integrierten und mit einer Zuführleitung für das kryogene Medium verbindbaren Ventil (1) zum Einleiten des kryogenen Mediums in das Behältnis (2),
wobei das Ventil (1) mit Mitteln (6,7,11,22) ausrüstet ist, die oberhalb eines vorgegebenen Differenzdrucks zwischen dem Druck des kryogenen Mediums in der Zuführleitung und dem Druck im Behältnis (2) die Einleitung des kryogenen Mediums ermöglichen, bei Unterschreiten des vorgegebenen Differenzdrucks dagegen das Ventil (1) sperren,
**dadurch gekennzeichnet,**
**dass** das Ventil (1) mit einem in einem Ventilgehäuse aufgenommenen, behälterseitig mit einem tellerförmigen Vorderabschnitt (13) ausgestatteten, Absperrglied (11) ausgerüstet ist, das im Schließzustand des Ventils (1) auf einer Dichtfläche (15) des Ventils (1) aufliegt, wobei die Dichtfläche (15) des Ventilgehäuses derart zurückgesetzt in der Wand (3) des Behältnisses (2) angeordnet ist, dass das Absperrglied (11) mit seinem tellerförmigen Vorderabschnitt (13) in einem Öffnungszustand des Ventils (1) im wesentlichen bündig zu einer Innenoberfläche (9) des Behältnisses (2) verläuft,
wobei das Absperrglied (11) begrenzt axial beweglich im Ventilgehäuse aufgenommen ist und bei maximalem Vorschub des Absperrglieds (11) die Stirnfläche (24) des tellerförmigen Vorderabschnitts (13) nicht weiter in das Innere des Behälters (2) vorsteht, als bis sie im wesentlichen bündig mit einer Innenoberfläche (9) des Behältnisses (2) angeordnet ist.

2. Vorrichtung nach Anspruch 1, **dadurch gekennzeichnet, dass** das Ventil (1) mit Mitteln ausgerüstet ist, die das kryogene Medium beim Einleiten in das Behältnis (2) in eine gegenüber der Einströmrichtung radiale Richtung ablenken.

3. Vorrichtung nach Anspruch 2, **dadurch gekennzeichnet, dass** der Vorderabschnitt (13) im Öffnungszustand des Ventils (1) das kryogene Medium in eine gegenüber der Einströmrichtung radiale Richtung ablenkt.

4. Vorrichtung nach Anspruch 3 **dadurch gekennzeichnet, dass** die Dichtfläche (15) des Ventilgehäuses konisch, sich zum Innern des Behältnisses (2) hin erweiternd, zugeformt ist.

5. Vorrichtung nach Anspruch 3 oder 4, **dadurch gekennzeichnet**, das das Absperrglied (11) gegen die Wirkung eines Federelements (22) bewegbar, in Öffnungsrichtung zum Innern des Behältnisses (2) hin, ausgebildet ist.

6. Vorrichtung nach Anspruch 5, **dadurch gekennzeichnet, dass** als Federelement eine Schließfeder (22) vorgesehen ist, die in der Schließposition des Ventils unter einer Vorspannung steht, derart, dass das Ventil erst bei Überschreiten eines bestimmten, durch die Federkraft der Schließfeder (22) festgelegten Differenzdrucks öffnet.

7. Vorrichtung nach einem der Ansprüche 3 bis 6, **dadurch gekennzeichnet, dass** das Absperrglied (11) auf seiner vom Behältnis (2) abgewandten Stirnseite (18) mit einem Halteabschnitt (17) ausgerüstet ist und sich das als Spiralfeder ausgestaltete Federelement (22) zwischen dem Halteabschnitt (17) und einem Federsitz (20) des Ventilgehäuses erstreckt.

8. Vorrichtung nach einem der vorhergehenden Ansprüche, **dadurch gekennzeichnet, dass** das Ventil (1) lösbar mit der Wand (3) des Behältnisses (2) verbunden ist.

9. Vorrichtung nach einem der vorhergehenden Ansprüche, **dadurch gekennzeichnet, dass** das Ventil (1) in einem beim Einsatz des Behälters (2) von einem zu kühlenden Produkt benetzten Bereich des Behälters (2) angeordnet ist.

10. Vorrichtung nach einem Ansprüche 1 bis 8, **dadurch gekennzeichnet, dass** das Ventil (1) in einer Leitung für ein flüssiges oder gasförmiges Produkt angeordnet ist.

11. Vorrichtung nach einem der vorhergehenden Ansprüche, **dadurch gekennzeichnet, dass** das Behältnis (2) in einer Mischeinrichtung für ein Produkt, insbesondere für ein Lebensmittel, integriert ist.

12. Vorrichtung nach einem der vorhergehenden Ansprüche, **dadurch gekennzeichnet, dass** als kryogenes Medium Flüssigstickstoff zum Einsatz kommt und der Differenzdruck zwischen 0,5 und 2,5 bar, bevorzugt 2 bis 2,5 bar, beträgt.

13. Vorrichtung nach einem der vorhergehenden Ansprüche, **dadurch gekennzeichnet, dass** als kryogenes Medium Kohlendioxid zum Einsatz kommt und der Differenzdruck auf einen Wert oberhalb des Tripelpunktes von Kohlendioxid, bevorzugt 7 bis 9 bar, beträgt.

14. Einrichtung zum Kühlen oder Frosten eines Produkts, **gekennzeichnet durch** eine Vorrichtung zum Eindosieren eines kryogenen Mediums nach einem der vorhergehenden Ansprüche.

15. Einrichtung nach Anspruch 15, **dadurch gekennzeichnet, dass** die Vorrichtung zum Eindosieren in einem Behälter integriert ist, in dem ein Rührwerk oder ein Schieber angeordnet ist.

## Claims

1. Apparatus for metering a cryogenic medium, having at least one valve (1) for introducing the cryogenic medium into a container (2), said valve (1) being integrated into the wall (3) of the container (2) and being connectable to a supply line for the cryogenic medium,
wherein the valve (1) is equipped with means (6, 7, 11, 22) which allow the introduction of the cryogenic medium above a predetermined differential pressure between the pressure of the cryogenic medium in the supply line and the pressure in the container (2) and, on the other hand, shut off the valve (1) when the pressure drops below the predetermined differential pressure,
**characterized**
**in that** the valve (1) is equipped with a shut-off member (11) which is accommodated in a valve housing, is provided on the container side with a plate-like front portion (13), and bears against a sealing surface (15) of the valve (1) in the closed state of the valve (1), wherein the sealing surface (15) of the valve housing is arranged in a manner set back in the wall (3) of the container (2) such that the plate-like front portion (13) of the shut-off member (11) extends in a substantially flush manner with an inner surface (9) of the container (2) in an open state of the valve (1),
wherein the shut-off member (11) is accommodated in the valve housing such as to be axially movable in a limited manner, and in the event of maximum advancement of the shut-off member (11), the end face (24) of the plate-like front portion (13) only protrudes into the interior of the container (2) until it is arranged substantially flush with an inner surface (9) of the container (2).

2. Apparatus according to Claim 1, **characterized in that** the valve (1) is equipped with means which deflect the cryogenic medium, as it is being introduced into the container (2), into a radial direction with respect to the inflow direction.

3. Apparatus according to Claim 2, **characterized in that**, in the open state of the valve (1), the front portion (13) deflects the cryogenic medium into a radial direction with respect to the inflow direction.

4. Apparatus according to Claim 3, **characterized in that** the sealing surface (15) of the valve housing is formed in a conical manner, widening towards the interior of the container (2).

5. Apparatus according to Claims 3 or 4, **characterized in that** the shut-off member (11) is formed to be movable, in the opening direction towards the interior of the container (2), counter to the action of a spring element (22).

6. Apparatus according to Claim 5, **characterized in that** as spring element there is provided a closing spring (22) which is prestressed in the closed position of the valve such that the valve opens only when a specific differential pressure defined by the spring force of the closing spring (22) is exceeded.

7. Apparatus according to one of Claims 3 to 6, **characterized in that** the shut-off member (11) is equipped on its end side (18) facing away from the container (2) with a retaining portion (17) and the spring element (22) configured as a spiral spring extends between the retaining portion (17) and a spring seat (20) of the valve housing.

8. Apparatus according to one of the preceding claims, **characterized in that** the valve (1) is connected detachably to the wall (3) of the container (2).

9. Apparatus according to one of the preceding claims, **characterized in that** the valve (1) is arranged in a region of the container (2) that is wetted by a product to be cooled when the container (2) is used.

10. Apparatus according to one of Claims 1 to 8, **characterized in that** the valve (1) is arranged in a line for a liquid or gaseous product.

11. Apparatus according to one of the preceding claims, **characterized in that** the container (2) is integrated in a mixing device for a product, in particular for a foodstuff.

12. Apparatus according to one of the preceding claims, **characterized in that** liquid nitrogen is used as cryogenic medium and the differential pressure is between 0.5 and 2.5 bar, preferably 2 to 2.5 bar.

13. Apparatus according to one of the preceding claims, **characterized in that** carbon dioxide is used as cryogenic medium and the differential pressure is above the triple point of carbon dioxide, preferably 7 to 9 bar.

14. Device for cooling or freezing a product, **characterized by** an apparatus for metering a cryogenic medium according to one of the preceding claims.

15. Device according to Claim 15, **characterized in that** the apparatus for metering is integrated in a container in which an agitator or a slide is arranged.

## Revendications

1. Dispositif pour le dosage d'un milieu cryogénique comprenant au moins une soupape (1) intégrée dans la paroi (3) d'un récipient (2) et pouvant être connectée à une conduite d'alimentation en milieu cryogénique, pour introduire le milieu cryogénique dans le récipient (2),
la soupape (1) étant munie de moyens (6, 7, 11, 22) qui, au-dessus d'une pression différentielle prédéfinie entre la pression du milieu cryogénique dans la conduite d'alimentation et la pression dans le récipient (2), permettent l'introduction du milieu cryogénique, et qui en dessous de la pression différentielle prédéfinie bloquent par contre la soupape (1),
**caractérisé en ce que**
la soupape (1) est munie d'un organe d'arrêt (11) reçu dans le boîtier de soupape, pourvu du côté du récipient d'une portion avant en forme de plateau (13), lequel organe d'arrêt, dans l'état de fermeture de la soupape (1), repose sur une surface d'étanchéité (15) de la soupape (1), la surface d'étanchéité (15) du boîtier de soupape étant disposée en retrait dans la paroi (3) du récipient (2) de telle sorte que l'organe d'arrêt (11) s'étende avec sa portion avant en forme de plateau (13) dans un état d'ouverture de la soupape (1) essentiellement en affleurement avec une surface intérieure (9) du récipient (2), l'organe d'arrêt (11) étant reçu de manière déplaçable axialement dans une mesure limitée dans le boîtier de soupape et en cas d'avance maximale de l'organe d'arrêt (11) la surface frontale (24) de la portion avant en forme de plateau (13) ne faisant saillie davantage à l'intérieur du récipient (2) que jusqu'à ce qu'elle soit disposée essentiellement en affleurement avec une surface intérieure (9) du récipient (2).

2. Dispositif selon la revendication 1, **caractérisé en ce que** la soupape (1) est munie de moyens qui dévient le milieu cryogénique lors de l'introduction dans le récipient (2) dans une direction radiale par rapport à la direction d'afflux.

3. Dispositif selon la revendication 2, **caractérisé en ce que** la portion avant (13) dans l'état d'ouverture de la soupape (1) dévie le milieu cryogénique dans une direction radiale par rapport à la direction d'afflux.

4. Dispositif selon la revendication 3, **caractérisé en ce que** la surface d'étanchéité (15) du boîtier de soupape est formée sous forme conique, en s'élargissant vers l'intérieur du récipient (2).

5. Dispositif selon la revendication 3 ou 4, **caractérisé en ce que** l'organe d'arrêt (11) est réalisé de manière à pouvoir être déplacé à l'encontre de l'effet d'un élément de ressort (22), dans la direction d'ouverture vers l'intérieur du récipient (2).

6. Dispositif selon la revendication 5, **caractérisé en ce que** l'on prévoit comme élément de ressort un ressort de fermeture (22) qui est soumis à une précontrainte dans la position de fermeture de la soupape de telle sorte que la soupape s'ouvre à partir du dépassement d'une pression différentielle déterminée, fixée par la force de ressort du ressort de fermeture (22).

7. Dispositif selon l'une quelconque des revendications 3 à 6, **caractérisé en ce que** l'organe d'arrêt (11) est muni sur son côté frontal (18) opposé au récipient (2) d'une portion de retenue (17) et l'élément de ressort (22) réalisé sous forme de ressort spiral s'étend entre la portion de retenue (17) et un siège de ressort (20) du boîtier de soupape.

8. Dispositif selon l'une quelconque des revendications précédentes, **caractérisé en ce que** la soupape (1) est connectée de manière desserrable à la paroi (3) du récipient (2).

9. Dispositif selon l'une quelconque des revendications précédentes, **caractérisé en ce que** la soupape (1) est disposée dans une région du récipient (2) mouillée par un produit à refroidir lors de l'utilisation du récipient (2).

10. Dispositif selon l'une quelconque des revendications 1 à 8, **caractérisé en ce que** la soupape (1) est disposée dans une conduite pour un produit fluide ou gazeux.

11. Dispositif selon l'une quelconque des revendications précédentes, **caractérisé en ce que** le récipient (2) est intégré dans un dispositif de mélange pour un produit, en particulier pour un produit alimentaire.

12. Dispositif selon l'une quelconque des revendications précédentes, **caractérisé en ce que** l'on utilise comme milieu cryogénique de l'azote liquide et la pression différentielle est comprise entre 0,5 et 2,5 bar, de préférence entre 2 et 2,5 bar.

13. Dispositif selon l'une quelconque des revendications précédentes, **caractérisé en ce que** l'on utilise comme milieu cryogénique du dioxyde de carbone et la pression différentielle à une valeur au-dessus du point triple du dioxyde de carbone vaut de préférence 7 à 9 bar.

14. Système de refroidissement ou de congélation d'un produit, **caractérisé par** un dispositif pour le dosage d'un milieu cryogénique selon l'une quelconque des revendications précédentes.

15. Système selon la revendication 14, **caractérisé en ce que** le dispositif pour le dosage est intégré dans un récipient dans lequel est disposé un agitateur ou un tiroir.
